# EUROPEAN PATENT APPLICATION

(11) **EP 0 661 498 A2**
(43) Date of publication of application: **05.07.1995**
(21) Application number: 94117720.6
(22) Date of filing: 10.11.1994
(51) Int. Cl.: F23L 15/04, F23J 15/06

(54) **Heat recovery**

(30) Priority: 29.12.1993 US 174794
(71) Applicant: COMBUSTION ENGINEERING, INC., Windsor Connecticut 06095-0500 (US)
(72) Inventor: Friedrichs, Gustave Emile, Canton, Connecticut 06019 (US); Skowyra, Richard Steven, Feeding Hills, Massachusetts 01030 (US)
(74) Representative: Rupprecht, Klaus, Dipl.-Ing.

(57) **Abstract**

The sensible heat from the flue gases produced in a fluidized bed combustion process (10) are first transferred to the combustion air in a conventional air preheater (40). Additional heat is then recovered in fluid coupled heat exchangers (46,48) with this additional heat either being transferred to the combustion air or to other fluid streams within or without the plant.

## Description

### Background of the Invention

The present invention relates to a method for recovering heat from flue gases from a fluidized bed combustion system.

A significant quantity of sensible heat from a combustion process is lost in the flue gases that are discharged to the atmosphere. In a conventional boiler, heat is recovered from the flue gases and transferred to the incoming combustion air in an air preheater. However, there is a limit as to how much heat can be recovered which is dictated by the acidic content of the flue gas in the form of sulfur oxides. As a general rule, the temperature of the flue gas cannot be reduced below the range of 260 to 280°F. Below that temperature range, the sulfur oxides would condense on the heat exchange surfaces of the air preheater and cause corrosion and fouling. Of course, there is a certain degree of flexibility depending upon the type of fossil fuel being fired and its sulfur content.

Fluidized bed combustion of fossil fuels has permitted the firing of fossil fuels which are too poor in quality for use in conventional firing systems. Fuels which contain high concentrations of sulfur can be burned efficiently while still meeting stringent requirements for the control of stack emissions without the use of flue gas scrubbers. In fluidized bed combustion, the fuel is burned in a bed of hot incombustible particles suspended in an upward flow of combustion air. For sulfur capture, limestone or similar reactive particles are introduced into the bed and serve as the sorbent for the sulfur oxides. This results in the production of flue gases which have a low sulfur oxide content.

### Summary of the Invention

The present invention relates to a process for recovering additional sensible heat from the flue gases generated in a fluidised bed combustion process. More specifically, the process involves the transfer of heat from the flue gases to the incoming combustion air in a conventional air preheater process and then recovering additional sensible heat by the use of fluid coupled heat exchangers. This additional sensible heat may be transferred to the incoming air or to any other fluid to be heated.

### Brief Description of the Drawings

Figure 1 illustrates a fluidized bed combustion system incorporating the heat exchange process of the present invention.

Figure 2 illustrates an alternative arrangement of the present invention.

### Description of the Preferred Embodiments

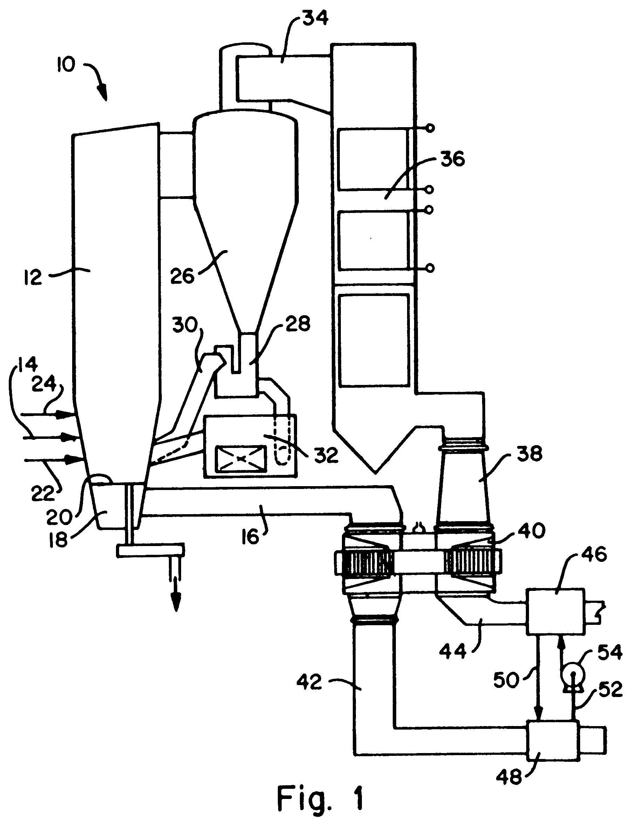

Referring to Figure 1, a typical fluidized bed steam generator system 10 is illustrated. The illustrated system is of the circulating type but the invention is applicable to any type of fluidised bed combustion such as the bubbling bed type. The system comprises the combustor 12 into which the fuel (usually coal) and sorbent (usually limestone) are fed at 14. The primary fluidising and combustion air, which has been preheated, is fed through duct 16 into the air plenum chamber 18 in the bottom of the combustor 12 and then up through the air distribution plate 20. Secondary combustion air is fed into the combustor at 22 and 24.

The solid particles carried from the combustor 12 along with the flue gases are mostly separated from the flue gases in the cyclone separator 26. The solids are discharged from the cyclone separator through the seal pot 28 either directly back to the combustor through duct 30 or through the fluidized bed heat exchanger 32, if so equipped. The flue gases exit the cyclone separator 26 in duct 34 and pass through the back-pass, convection section 36 of the steam generator usually containing the economizer, superheater and reheater heat exchange surface.

The flue gas, which is now typically at 600 to 800°F is discharged from the back-pass through duct 38 into the conventional air preheater 40 of any desired design where heat is transferred to the incoming combustion air in duct 42. The incoming air is normally heated to 500 to 750° F and fed through the duct 16 to the combustor 12 as previously mentioned. Because the conventional air preheater is an air-to-gas heat exchanger, the temperature of the flue gas can only be reduced to a certain level. Also, the presence of any remaining low levels of sulfur oxides means that the flue gas temperature should not be reduced below the dew point temperature of the sulfur oxides in the air preheater.

The flue gas temperature at the exit of the air preheater 40 in the duct 44 is now in the range of 260 to 280°F which is above the dew point of the sulfur oxides remaining in the flue gas. Located in the duct 44 is a gas-to-fluid heat exchanger 46 of any desired conventional design. Located in duct 42 is a corresponding fluid-to-gas heat exchanger 48. These heat exchangers would typically contain tubular heat transfer coils or other comparable heat exchange configurations with the tubes containing a heat transfer fluid. Preferably, the heat transfer fluid is an available organic fluid having the proper heat transfer properties such as the Downtherms made by Dow Chemical and the Therminols made by Monsanto. However, any known fluid, including water, conventionally used in heat transfer application can be used. The heat transfer surfaces in the two heat exchangers are connected together by lines 50 and 52 as shown through a pump 54. The pump circulates the heat transfer fluid through the heat exchangers and transfers the heat from the flue gas to the incoming air. The partially heated incoming air is then further heated in the air preheater 40.

The heat exchanger arrangement is sized to reduce the flue gas temperature to any desired level which may be below the dew point of the sulfur oxides, if any. The heat recovery represented by a 40°F lower exit flue gas temperature is equivalent to about a 1% increase in boiler efficiency.

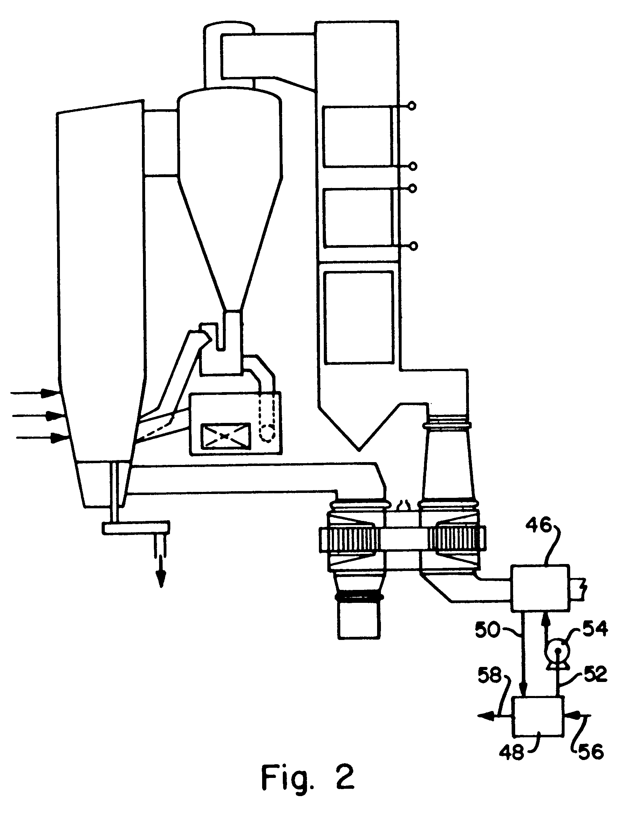

Figure 2 illustrates another embodiment of the present invention wherein the heat recovered from the flue gas by the heat exchanger 46 is transferred to a fluid to be heated other than the combustion air. For example, the fluid might be air for heating the buildings, potable water, feedwater to the boiler or an associated process. In this case, the fluid to be heated is fed to the heat exchanger 48 through line 56 and exits through line 58.

The recovery of the additional heat from the flue gases according to the present invention increases the boiler and/or overall cycle efficiency because less heat is discharged to the atmosphere. It reduces fuel costs, reduces the quantity of emissions per unit of energy generated and reduces the size of equipment such as particulate control equipment, fans and duct work.

## Claims

1. A method of recovering heat from the flue gas stream from a fluidized bed combustion system comprising transferring a first quantity of heat from said flue gas to incoming combustion air in an air-to-gas air preheater to reduce the temperature of said flue gas to a first lower level which is above the dew point of any sulfur oxide which may be in said flue gas and then transferring a second quantity of heat from said flue gas stream to another fluid stream by means of fluid coupled heat exchangers to reduce the temperature of said flue gas to a second lower level which is below the dew point of any sulfur oxides which may be in said flue gas.

2. A method as recited in claim 1 wherein said another fluid stream is said combustion air.

3. A method of recovering heat from the flue gas stream from a fluidized bed combustion system for the burning of fuel in which resulting sulfur oxides are substantially removed in said fluidized bed leaving a small quantity of sulfur oxides in said flue gas stream comprising transferring a first quantity of heat from said flue gas stream to incoming combustion air in an air-to-gas heat exchanger such that the flue gas stream exiting said heat exchanger is above the dew point of said small quantity of sulfur oxides and transferring a second quantity of heat from said flue gas stream to another fluid stream by means of fluid coupled heat exchangers such that the flue gas stream exiting said fluid coupled heat exchanger is below the dew point of said small quantity of sulfur oxides.

4. A method as recited in claim 3 wherein said another fluid stream is said combustion air.
